# EUROPÄISCHE PATENTSCHRIFT

(11) **EP 2 952 817 B1**
(45) Veröffentlichungstag und Bekanntmachung des Hinweises auf die Patenterteilung: **10.07.2019**
(21) Anmeldenummer: 15167837.2
(22) Anmeldetag: 15.05.2015
(51) Int. Cl.: F24C 3/12, G05G 1/12, F16B 21/18, F16B 2/24

(54) **Gasventil mit einer Hausgeräte-Bedienanordnung und Herd**
Gas valve with a domestic appliance control assembly and cooker
Vanne de gaz avec un système de commande d'un appareil ménager et cuisinière

(30) Priorität: 28.05.2014 ES 201430805
(43) Veröffentlichungstag der Anmeldung: 09.12.2015
(73) Patentinhaber: BSH Hausgeräte GmbH, 81739 München (DE)
(72) Erfinder: Abascal Carrera, Luis Alberto, 39609 Camargo (ES); Beivide Sansegundo, Nuria, 39409 San Felices de Buelna (ES); Ruiloba Franco, Manuel Alejandro, 39320 Cantabria (ES)

(56) Entgegenhaltungen:
- EP-A2- 2 527 951
- EP-A2- 2 620 831
- EP-A2- 3 032 370
- JP-U- S55 122 521
- US-A- 2 172 977

## Beschreibung

Die vorliegende Erfindung betrifft ein Gasventil aufweisend eine Hausgeräte-Bedienanordnung und einen Herd.

Ein Gasherd weist zumeist zumindest ein Gasventil auf, das mit Hilfe eines Betätigungsschafts betätigbar ist. An dem Betätigungsschaft kann ein Betätigungsknauf vorgesehen sein. Der Betätigungsknauf kann auf dem Betätigungsschaft aufgesteckt sein. Es ist wünschenswert, bei der Montage des Betätigungsknaufs an dem Betätigungsschaft eine möglichst geringe Kraft auf diesen aufzubringen, um eine Beschädigung des Gasventils zu vermeiden. Ferner ist es wünschenswert, eine hohe Abzugskraft des Betätigungsknaufs von dem Betätigungsschaft zu erreichen, um zu verhindern, dass ein Benutzer den Betätigungsknauf ungewollt von dem Betätigungsschaft abzieht.

Die EP 2 620 831 A2 zeigt ein Bedienelement für ein Ventil eines Haushaltsgeräts. Das Bedienelement hat eine Greiffläche zum Greifen des Bedienelements durch einen Benutzer und eine Kopplungseinrichtung zur lösbaren Kopplung des Bedienelements mit einer Ventilwelle des Ventils, wobei die Kopplungseinrichtung ein Schnappelement aufweist, welches an ein entsprechendes Element der Ventilwelle angepasst ist, um mit ihm einen Schnappverschluss zu bilden.

Die US 2,172,977 A zeigt ein Bedienelement für ein Elektrogerät, wobei das Bedienelement an einem Betätigungsschaft des Elektrogeräts drehfest befestigt ist. Das Bedienelement ist mittels einer Feder auf dem Betätigungsschaft fixiert, wobei die Feder an das Bedienelement angeschraubt ist.

Die EP 2 527 951 A2 zeigt ein Bedienelement für ein Hausgerät, mit einem greifbaren Bedienteil, welches mit einer Haltestange drehfest verbunden ist, und um die Längsachse der Haltestange drehbar ist. Das Bedienelement umfasst eine Haltefeder, welche an einer Mantelseite der Haltestange vorgespannt anliegt.

Vor diesem Hintergrund besteht eine Aufgabe der vorliegenden Erfindung darin, ein verbessertes Gasvenitl zur Verfügung zu stellen.

Demgemäß wird ein Gasventil vorgeschlagen, welches eine Hausgeräte-Bedienanordnung mit einem Betätigungsschaft zum Betätigen des Gasventils, einem auf oder an dem Betätigungsschaft angeordneten Betätigungsknauf und einer Befestigungseinrichtung zum Befestigen des Betätigungsknaufs an dem Betätigungsschaft umfasst. Dabei ist eine Aufdrückkraft, die kleiner als 30 N ist, beim Aufdrücken des Betätigungsknaufs und der Befestigungseinrichtung auf den Betätigungsschaft in axialer Richtung desselben kleiner als eine Abzugskraft beim Abziehen des Betätigungsknaufs und der Befestigungseinrichtung von dem Betätigungsschaft in axialer Richtung desselben. Die Befestigungseinrichtung weist wenigstens zwei Greifarme auf, die dazu eingerichtet sind, den Betätigungsschaft teilweise zu umgreifen. Der Betätigungsknauf weist einen Aufnahmeabschnitt zum Aufnehmen des Betätigungsschafts auf. Der Betätigungsschaft weist eine Einführschräge zum Einführen desselben in den Aufnahmeabschnitt auf. Die Höhe der Aufdrückkraft ist durch eine Variation einer Geometrie der Einführschräge des Betätigungsschafts einstellbar.

Hierdurch wird eine Beschädigung des Gasventils beim Aufdrücken des Betätigungsknaufs und der Befestigungseinrichtung auf denselben verhindert. Ferner wird hierdurch gleichzeitig erreicht, dass ein ungewolltes Abziehen des Betätigungsknaufs und der Befestigungseinrichtung von dem Betätigungsschaft verhindert wird. Insbesondere ist die Abzugskraft größer als 50 N.

Gemäß einer Ausführungsform ist die Aufdrückkraft um einen vorbestimmten Faktor kleiner als die Abzugskraft, wobei der vorbestimmte Faktor bevorzugt 0,8, weiter bevorzugt 0,7, weiter bevorzugt 0,6, weiter bevorzugt 0,5 und weiter bevorzugt 0,4 beträgt.

Gemäß einer weiteren Ausführungsform umfasst der Betätigungsschaft eine Ringnut, in die die Befestigungseinrichtung zum Befestigen des Befestigungsknaufs an dem Betätigungsschaft eingreift.

Insbesondere greift die Befestigungseinrichtung formschlüssig in die Ringnut ein.

Gemäß einer weiteren Ausführungsform ist die Befestigungseinrichtung elastisch verformbar.

Vorzugsweise ist die Befestigungseinrichtung aus einem Federstahldraht gefertigt. Die Befestigungseinrichtung kann eine U-Form aufweisen. Schenkel der U-Form sind insbesondere mit Hilfe eines Werkzeugs auseinander biegbar, um den Betätigungsknauf mit der Befestigungseinrichtung von dem Betätigungsschaft abzuziehen.

Die Befestigungseinrichtung weist wenigstens zwei Greifarme auf, die dazu eingerichtet sind, den Betätigungsschaft teilweise zu umgreifen.

Die Greifarme sind insbesondere die Schenkel der zuvor beschriebenen U-Form. Die Greifarme sind vorzugsweise federelastisch verformbar.

Der Betätigungsknauf weist einen Aufnahmeabschnitt zum Aufnehmen des Betätigungsschafts auf.

Der Aufnahmeabschnitt ist vorzugsweise rohrförmig. Der Betätigungsknauf ist vorzugsweise aus einem Kunststoffmaterial gefertigt. Insbesondere ist der Betätigungsknauf ein Kunststoffspritzgussbauteil.

Gemäß einer weiteren Ausführungsform greift der Aufnahmeabschnitt formschlüssig in eine an dem Betätigungsschaft vorgesehene Abflachung ein.

Der Aufnahmeabschnitt weist eine zu der Abflachung des Betätigungsschafts korrespondierende Geometrie auf.

Der Betätigungsschaft weist eine Einführschräge zum Einführen desselben in den Aufnahmeabschnitt auf.

Die Höhe der Aufdrückkraft ist durch eine Variation einer Geometrie der Einführschräge des Betätigungsschafts einstellbar.

Insbesondere ist eine Neigung der Einführschräge variabel, um die Höhe der Aufdrückkraft einzustellen.

Gemäß einer weiteren Ausführungsform ist die Befestigungseinrichtung in oder an dem Betätigungsknauf befestigt.

Insbesondere greift die Befestigungseinrichtung formschlüssig in an dem Aufnahmeabschnitt vorgesehene Ausnehmungen ein.

Es wird ein Gasventil mit einem Betätigungsschaft zum Betätigen des Gasventils und einer derartigen Hausgeräte-Bedienanordnung vorgeschlagen.

Ferner wird ein Herd mit zumindest einer derartigen Hausgeräte-Bedienanordnung nach und/oder zumindest einem derartigen Gasventil vorgeschlagen.

Der Herd ist insbesondere ein Haushaltsgerät. Anstelle des Herdes kann die Hausgeräte-Bedienanordnung auch an einer Kochmulde vorgesehen sein. Vorzugsweise ist der Herd ein Gasherd.

Weitere vorteilhafte Ausgestaltungen und Aspekte der Erfindung sind Gegenstand der Unteransprüche sowie der im Folgenden beschriebenen Ausführungsbeispiele der Hausgeräte-Bedienanordnung, des Gasventils und/oder des Herds. Im Weiteren werden die Hausgeräte-Bedienanordnung, das Gasventil und/oder der Herd anhand von bevorzugten Ausführungsformen unter Bezugnahme auf die beigelegten Figuren näher erläutert.
- Fig. 1: zeigt eine schematische perspektivische Ansicht einer Ausführungsform eines Herds;
- Fig. 2: zeigt eine schematische Schnittansicht einer Hausgeräte-Bedienanordnung;
- Fig. 3: zeigt eine schematische Schnittansicht eines Betätigungsschafts der Hausgeräte-Bedienanordnung gemäß der Fig. 2;
- Fig. 4: zeigt eine schematische Aufsicht einer Befestigungseinrichtung der Hausgeräte-Bedienanordnung gemäß der Fig. 2; und
- Fig. 5: zeigt eine schematische perspektivische Ansicht der Hausgeräte-Bedienanordnung gemäß der Fig. 2.

In den Figuren sind gleiche oder funktionsgleiche Elemente mit denselben Bezugszeichen versehen worden, sofern nichts anderes angegeben ist.

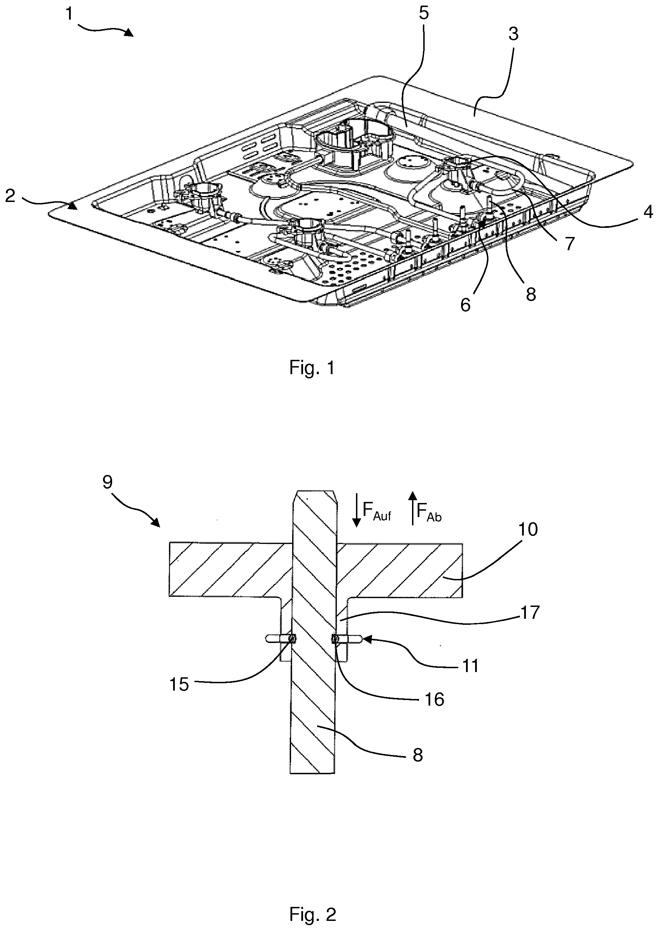

Die Fig. 1 zeigt eine schematische perspektivische Ansicht einer Kochmulde bzw. eines Herds 1. Der Herd 1 ist insbesondere ein Gasherd. Der Herd 1 umfasst eine Kochstelle 2, insbesondere eine Gaskochstelle. Die Kochstelle 2 weist ein wannenförmiges Bodenblech 3 auf, in oder an dem mehrere Gasbrenner 4 zumindest teilweise aufgenommen sind. Die Kochstelle 2 umfasst mindestens einen Gasbrenner 4. Wie die Fig. 1 zeigt, kann die

Kochstelle 2 vier Gasbrenner umfassen. In der Fig. 1 ist lediglich einer der Gasbrenner 4 mit einem Bezugszeichen versehen.

Die Kochstelle 2 weist ferner eine Gashauptleitung 5 auf. Die Gashauptleitung 5 ist über ein Gasventil 6 und eine Zufuhrleitung 7 mit einem Gasbrenner 4 fluidisch verbunden. Die Kochstelle 2 umfasst mindestens einen Gasbrenner 4, die Gashauptleitung 5, mindestensein Gasventil 6 und mindestens eine Zufuhrleitung 7. Insbesondere sind jedem Gasbrenner 4 ein Gasventil 6 und eine Zufuhrleitung 7 zugeordnet. Das Gasventil 6 ist dazu eingerichtet, einen Brenngasstrom von der Gashauptleitung 5 durch die Zufuhrleitung 7 hin zu dem Gasbrenner 4 stufenlos oder gestuft zu regeln. Jedes Gasventil 6 weist einen Betätigungsschaft 8 auf. Der Betätigungsschaft 8 ragt aus einem Ventilgehäuse des Gasventils 6 heraus. Insbesondere ragt der Betätigungsschaft 8 über das wannenförmige Bodenblech 3 heraus.

Die Fig. 2 zeigt eine schematische Schnittansicht einer Hausgeräte-Bedienanordnung 9. Die Hausgeräte-Bedienanordnung 9 umfasst den Betätigungsschaft 8, einen auf oder an dem Betätigungsschaft 8 angeordneten Betätigungsknauf 10 und eine Befestigungseinrichtung 11 zum Befestigen des Betätigungsknaufs 10 an dem Betätigungsschaft 8.

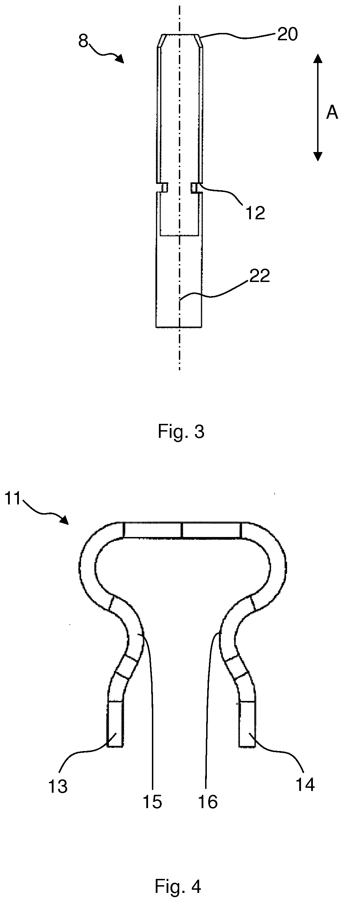

Die Fig. 3 zeigt in einer schematischen Schnittansicht den Betätigungsschaft 8. Der Betätigungsschaft 8 umfasst eine Ringnut 12, in die die Befestigungseinrichtung 11 zum Befestigen des Betätigungsknaufs 10 an dem Betätigungsschaft 8 formschlüssig eingreift.

Die Fig. 4 zeigt in einer schematischen Ansicht die Befestigungseinrichtung 11. Die Befestigungseinrichtung 11 ist insbesondere aus einem Federstahldraht gefertigt. Die Befestigungseinrichtung 11 weist insbesondere eine U-Form auf. Die Befestigungseinrichtung 11 weist wenigstens zwei Greifarme 13, 14 auf, die dazu eingerichtet sind, den Betätigungsschaft 8 teilweise zu umgreifen. Insbesondere sind die wenigstens zwei Greifarme 13, 14 dazu eingerichtet, in die Ringnut 12 einzugreifen. Die Befestigungseinrichtung 11 ist elastisch verformbar. Jeder Greifarm weist einen Nuteingriffsabschnitt 15, 16 auf.

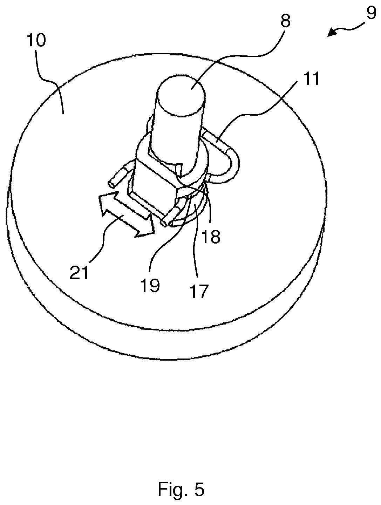

Wie die Fig. 2 zeigt, ist an dem Betätigungsknauf 10 ein Aufnahmeabschnitt 17 zum Aufnehmen des Betätigungsschafts 8 vorgesehen. Der Aufnahmeabschnitt 17 ist insbesondere rohrförmig. Wie die Fig. 5 zeigt, umfasst der Betätigungsschaft 8 eine seitliche Abflachung 18, in die der Aufnahmeabschnitt 17 formschlüssig eingreift. An dem Aufnahmeabschnitt 17 sind ferner seitliche Ausnehmungen 19 vorgesehen, durch die die Nuteingriffsabschnitte 15, 16 der Greifarme 13, 14 der Befestigungseinrichtung 11 hindurch in die Ringnut 12 des Betätigungsschafts 8 eingreifen können.

Zum Befestigen des Betätigungsknaufs 10 und der Befestigungseinrichtung 11 auf oder an dem Betätigungsschaft 8 wird der Betätigungsknauf 10 mit der montierten Befestigungseinrichtung 11 auf den Betätigungsschaft 8 aufgeschoben. Hierzu weist der Betätigungsschaft 8 eine in der Fig. 3 gezeigte Einführschräge 20 zum Einführen desselben in den Aufnahmeabschnitt 17 des Betätigungsknaufes 10 auf. Die Höhe einer Aufdrückkraft F_{Auf} zum Aufdrücken des Betätigungsknaufs 10 und der Befestigungseinrichtung 11 in einer axialen Richtung A des Betätigungsschafts 8 auf denselben ist kann durch eine Variation einer Geometrie der Einführschräge 20 des Betätigungsschafts 8 einstellbar. Insbesondere kann eine Neigung der Einführschräge 20 zum Einstellen der Aufdrückkraft F_{Auf} variiert werden.

Zum Abziehen des Betätigungsknaufs 10 und der Befestigungseinrichtung 11 von dem Betätigungsschaft 8 können die Greifarme 13, 14 der Befestigungseinrichtung 11, wie in der Fig. 5 gezeigt, in Richtung eines Pfeils 21 auseinander gebogen werden. Hierdurch kommen die Nuteingriffsabschnitte 15, 16 außer Eingriff mit der Ringnut 12 und der Betätigungsknauf 10 kann mit der Befestigungseinrichtung 11 in axialer Richtung A des Betätigungsschafts 8 von diesem abgezogen werden. Die axiale Richtung A des Betätigungsschafts ist vorzugsweise parallel zu einer Mittelachse 22 des Betätigungsschafts 8 orientiert.

Die Aufdrückkraft F_{Auf} beim Aufdrücken des Betätigungsknaufs 10 und der Befestigungseinrichtung 11 auf den Betätigungsschaft 8 in axialer Richtung A desselben ist kleiner als eine Abzugskraft F_{Ab} beim Abziehen des Betätigungsknaufs 10 und der Befestigungseinrichtung 11 von dem Betätigungsschaft 8 in axialer Richtung A desselben. Insbesondere ist die Aufdrückkraft F_{Auf} um einen vorbestimmten Faktor kleiner als die Abzugskraft F_{Ab}. Der vorbestimmte Faktor beträgt vorzugsweise 0,8, weiter bevorzugt 0,7, weiter bevorzugt 0,6, weiter bevorzugt 0,5 und weiter bevorzugt 0,4.

Insbesondere ist die Abzugskraft F_{Ab} größer als 50 N. Die Aufdrückkraft F_{Auf} ist kleiner als 30 N. Hierdurch kann eine Beschädigung des Gasventils 6 beim Aufdrücken des Betätigungsknaufs 10 und der Befestigungseinrichtung 11 auf den Betätigungsschaft 8 verhindert werden. Dadurch, dass die Greifarme 13, 14 formschlüssig in die Ringnut 12 eingreifen, kann eine sehr hohe Abzugskraft F_{Ab} von über 50 N erzielt werden. Hierdurch sind der Betätigungsknauf 10 und die Befestigungseinrichtung 11 von einem Benutzer nicht ohne zusätzliches Werkzeug von dem Gasventil 6 entfernbar. Ferner verhindert die geringe Aufdrückkraft F_{Auf} eine Beschädigung des Gasventils 6 bei der Montage des Betätigungsknaufs 10.

### Verwendete Bezugszeichen:

- 1: Herd
- 2: Kochstelle
- 3: Bodenblech
- 4: Gasbrenner
- 5: Gashauptleitung
- 6: Gasventil
- 7: Zufuhrleitung
- 8: Betätigungsschaft
- 9: Hausgeräte-Bedienanordnung
- 10: Betätigungsknauf
- 11: Befestigungseinrichtung
- 12: Ringnut
- 13: Greifarm
- 14: Greifarm
- 15: Nuteingriffsabschnitt
- 16: Nuteingriffsabschnitt
- 17: Aufnahmeabschnitt
- 18: Abflachung
- 19: Ausnehmung
- 20: Einführschräge
- 21: Pfeil
- 22: Mittelachse

- A: Axialrichtung
- F_{Ab}: Abzugskraft
- F_{Auf}: Aufdrückkraft

## Patentansprüche

1. Gasventil (6) aufweisend eine Hausgeräte-Bedienanordnung (9) mit einem Betätigungsschaft (8) zum Betätigen des Gasventils (6), einem auf oder an dem Betätigungsschaft (8) angeordneten Betätigungsknauf (10) und einer Befestigungseinrichtung (11) zum Befestigen des Betätigungsknaufs (10) an dem Betätigungsschaft (8), wobei eine Aufdrückkraft (F_{Auf}) beim Aufdrücken des Betätigungsknaufs (10) und der Befestigungseinrichtung (11) auf den Betätigungsschaft (8) in axialer Richtung (A) desselben kleiner als eine Abzugskraft (F_{Ab}) beim Abziehen des Betätigungsknaufs (10) und der Befestigungseinrichtung (11) von dem Betätigungsschaft (8) in axialer Richtung (A) desselben ist und wobei der Betätigungsknauf (10) einen Aufnahmeabschnitt (17) zum Aufnehmen des Betätigungsschafts (8) aufweist, wobei der Betätigungsschaft (8) eine Einführschräge (20) zum Einführen desselben in den Aufnahmeabschnitt (17) aufweist
**dadurch gekennzeichnet, dass**
die Befestigungseinrichtung (11) wenigstens zwei Greifarme (13, 14) aufweist, die dazu eingerichtet sind, den Betätigungsschaft (8) teilweise zu umgreifen, dass die Aufdrückkraft (F_{Auf}) kleiner als 30 N ist, und dass eine Höhe der Aufdrückkraft (F_{Auf}) durch eine Variation einer Geometrie der Einführschräge (20) des Betätigungsschafts (8) einstellbar ist.

2. Gasventil nach Anspruch 1, **dadurch gekennzeichnet, dass** die Aufdrückkraft (F_{Auf}) um einen vorbestimmten Faktor kleiner als die Abzugskraft (F_{Ab}) ist und dass der vorbestimmte Faktor bevorzugt 0,8, weiter bevorzugt 0,7, weiter bevorzugt 0,6, weiter bevorzugt 0,5 und weiter bevorzugt 0,4 beträgt.

3. Gasventil nach Anspruch 1 oder 2, **dadurch gekennzeichnet, dass** der Betätigungsschaft (8) eine Ringnut (12) umfasst, in die die Befestigungseinrichtung (11) zum Befestigen des Betätigungsknaufs (10) an dem Betätigungsschaft (8) eingreift.

4. Gasventil nach einem der Ansprüche 1 - 3, **dadurch gekennzeichnet, dass** die Befestigungseinrichtung (11) elastisch verformbar ist.

5. Gasventil nach einem der Ansprüche 1 - 4, **dadurch gekennzeichnet, dass** der Aufnahmeabschnitt (17) formschlüssig in eine an dem Betätigungsschaft (8) vorgesehene Abflachung (18) eingreift.

6. Gasventil nach einem der Ansprüche 1 - 5, **dadurch gekennzeichnet, dass** die Befestigungseinrichtung (11) in oder an dem Betätigungsknauf (10) befestigt ist.

7. Herd (1) mit zumindest einem Gasventil (6) nach einem der Ansprüche 1 - 6.

## Claims

1. Gas valve (6) having a household appliance control assembly (9) with an actuating shaft (8) for actuating the gas valve (6), an actuating knob (10) arranged on or at the actuating shaft (8) and a fastening device (11) for fastening the actuating knob (10) to the actuating shaft (8), wherein when the actuating knob (10) and the fastening device (11) are pressed onto the actuating shaft (8) in the axial direction (A) thereof a pressing force (F_{Auf}) is less than a withdrawal force (F_{Ab}) when withdrawing the actuating knob (10) and the fastening device (11) from the actuating shaft (8) in the axial direction (A) thereof and
wherein the actuating knob (10) has a receiving portion (17) for receiving the actuating shaft (8), wherein the the actuating shaft (8) has an insertion bevel (20) for insertion thereof into the receiving portion (17),
**characterised in that**
the fastening device (11) has at least two gripping arms (13, 14) which are adapted to partially surround the actuating shaft (8), that the pressing force (F_{Auf}) is less than 30 N, and that the amount of the pressing force (F_{Auf}) can be adjusted by a variation of a geometry of the insertion bevel (20) of the actuating shaft (8).

2. Gas valve according to claim 1, **characterised in that** the pressing force (F_{Auf}) is less than the withdrawal force (F_{Ab}) by a predetermined factor and that the predetermined factor is preferably 0.8, further preferably 0.7, further preferably 0.6, further preferably 0.5 and further preferably 0.4.

3. Gas valve according to claim 1 or 2, **characterised in that** the actuating shaft (8) comprises an annular groove (12), into which the fastening device (11) for fastening the actuating knob (10) to the actuating shaft (8) engages.

4. Gas valve according to one of claims 1 - 3, **characterised in that** the fastening device (11) is elastically deformable.

5. Gas valve according to one of claims 1 - 4, **characterised in that** the receiving portion (17) engages positively into a flattening (18) provided on the actuating shaft (8).

6. Gas valve according to one of claims 1 - 5, **characterised in that** the fastening device (11) is fastened in or at the actuating knob (10).

7. Stove (1) having at least one gas valve (9) according to one of claims 1 - 6.

## Revendications

1. Vanne de gaz (6) présentant un agencement de commande d'appareil ménager (9) avec came d'actionnement (8) pour l'actionnement de la vanne de gaz (6), un bouton d'actionnement (10) situé sur ou à la came d'actionnement (8), et un dispositif de fixation (11) destiné à fixer le bouton d'actionnement (10) à la came d'actionnement (8), la force de pression (F_{Auf}) de celui-ci lors de la pression du bouton d'actionnement (10) et du dispositif de fixation (11) sur le came d'actionnement (8) dans le sens axial, étant plus petite que la force de retrait (F_{Ab}) lors du retrait du bouton d'actionnement (10) et du dispositif de fixation (11) de la came d'actionnement (8) dans le sens axial (A)
de celui-ci, et
ce bouton d'actionnement (10) présentant une section de prise (17) pour la prise de la came d'actionnement (8), cette came d'actionnement (8) présentant une oblique de guidage (20) pour le guidage de celle-ci dans la section de prise (17), **caractérisée en ce que** le dispositif de fixation (11) présente au moins deux bras de préhension (13, 14) prévus pour saisir la came d'actionnement (8) en partie, **en ce que** la force de pression (F_{Auf}) est inférieure à 30 N et **en ce que** la hauteur de la force de pression (F_{Auf}) est réglable par la variation de la géométrie de l'oblique de guidage (20) de la came d'actionnement (8).

2. Vanne de gaz selon la revendication 1, **caractérisé en ce que** la force de pression (F_{Auf}) est plus petite d'un facteur prédéterminé que la force de retrait (F_{Ab}) et **en ce que** ce facteur prédéterminé est de préférence 0,8, de manière encore préférée 0,7, de manière encore préférée 0,6, de manière encore préférée 0,5 et de manière encore préférée 0,4.

3. Vanne de gaz selon la revendication 1 ou 2, **caractérisé en ce que** la came d'actionnement (8) comprend une nervure annulaire (12) dans laquelle vient se prendre le dispositif de fixation (11) destiné à la fixation du bouton d'actionnement (10) à la came d'actionnement (8).

4. Vanne de gaz selon l'une des revendications 1 - 3, **caractérisée en ce que** le dispositif de fixation (11) est élastiquement déformable.

5. Vanne de gaz selon l'une des revendications 1 - 4, **caractérisée en ce que** la section de prise (17) se met en prise par emboîtement dans un méplat (18) prévu à la came d'actionnement (8).

6. Vanne de gaz selon l'une des revendications 1 - 5, **caractérisée en ce que** le dispositif de fixation (11) est fixé dans ou au bouton d'actionnement (10).

7. Cuisinière (1) avec au moins une vanne de gaz (6) selon l'une des revendications 1 - 6.
